# NEUE EUROPÄISCHE PATENTSCHRIFT

(11) **EP 0 830 429 B2**
(45) Veröffentlichungstag und Bekanntmachung des Hinweises auf die Entscheidung über den Einspruch: **01.06.2005**
(45) Hinweis auf die Patenterteilung: 21.04.1999
(21) Anmeldenummer: 96919767.2
(22) Anmeldetag: 10.05.1996
(51) Int. Cl.: C09C 3/06, C09C 1/00, C04B 33/14

(54) **BESCHICHTETE ANORGANISCHE PIGMENTE, VERFAHREN ZU DEREN HERSTELLUNG UND DEREN VERWENDUNG**
COATED INORGANIC PIGMENTS, PROCESS FOR THEIR PRODUCTION AND THEIR USE
PIGMENTS INORGANIQUES ENROBES, LEUR PROCEDE DE PRODUCTION ET LEUR UTILISATION

(30) Priorität: 08.06.1995 DE 19520964
(43) Veröffentlichungstag der Anmeldung: 25.03.1998
(73) Patentinhaber: INSTITUT FÜR NEUE MATERIALIEN gemeinnützige GmbH, 66123 Saarbrücken (DE)
(72) Erfinder: SCHMIDT, Helmut, D-66130 Saarbrücken (DE); MENNIG, Martin, D-66287 Quierschied (DE); KALLEDER, Axel, D-66125 Saarbrücken-Dudweiler (DE)
(74) Vertreter: Barz, Peter, Dr.
(86) Internationale Anmeldenummer: PCT/EP1996/002017
(87) Internationale Veröffentlichungsnummer: WO 1996/041840

(56) Entgegenhaltungen:
- EP-A- 0 455 933
- EP-A- 0 665 004
- DE-A- 2 424 599
- US-A- 5 261 955
- DATABASE WPI Week 9009 Derwent Publications Ltd., London, GB; AN 90-062693 XP002014027 & JP,A,02 014 819 (NIPPON SHASHIN INSA) , 18.Januar 1990
- DATABASE WPI Week 9529 Derwent Publications Ltd., London, GB; AN 95-220736 XP002014028 & JP,A,07 133 211 (AYATSURA KESHOHIN; FUJI SHIKISO) , 23.Mai 1995
- DATABASE WPI Week 8523 Derwent Publications Ltd., London, GB; AN 85-137874 XP002014029 & JP,A,60 072 963 (HONSHU PAPER MFG.; TOYO DENKA KOGYO) , 25.April 1985

## Beschreibung

Die Erfindung betrifft beschichtete anorganische Pigmente, ein Verfahren zu deren Herstellung nach dem Sol-Gel-Prozeß sowie deren Verwendung zur Herstellung von Emails und Formkörpern.

Es ist bereits bekannt, auf plane Substrate Einkomponenten-(z.B. SiO₂) oder Mehrkomponenten-Glasschichten nach dem Sol-Gel-Verfahren aufzubringen; siehe z.B. DE 3719339, DE 4117041 und DE 4217432. Andererseits ist es bekannt, anorganische Partikel mit Hilfe des Sol-Gel-Verfahrens mit keramischen Beschichtungen zu versehen. Beispielsweise können SiO₂-Partikel mit einer ZrO₂-Schicht oder Kupferchromspinell-Telichen mit einer Mullitschicht versehen werden. Die Schichtdicke der Beschichtung liegt in diesen Fällen im nm-Bereich bis ca. 100 nm. Für den Schutz redoxempfindlicher anorganischer Pigmente gegen Oxidations-oder Reduktionsprozesse bei Temperaturen im Bereich von 500 bis 700°C, wie sie zur Herstellung von Emails angewandt werden, sind derart dünne Schichten jedoch ungeeignet, da sie die Diffusion gasförmiger Stoffe nicht wirksam unterdrücken können. Außerdem lösen sich die sehr dünnen Beschichtungen in Gegenwart aggressiver Glasschmelzen, wie sie z.B. für Emaildekors auf Gläsern verwendet werden, in kurzer Zeit auf, wodurch das Pigment unter Farbänderung zersetzt oder in der Glasmatrix gelöst wird.

Überraschenderweise wurde nun gefunden, daß es möglich ist, mit Hilfe des Sol-Gel-Verfahrens intakte glasbildende Schichten auf anorganischen Pigmenten zu erzeugen, deren Schichtdicke um mehr als eine Größenordung über der herkömmlicher Produkte liegt.

Gegenstand der Erfindung sind deshalb beschichtete anorganische Pigmente, umfassend ein anorganisches Pigment, das eine nach dem Sol-Gel-Verfahren aus glasbildenden Komponenten hergestellte und zu einem Xerogel oder Glas verdichtete Beschichtung mit einer Schichtdicke von mindestens 0,8 µm, vorzugsweise 1 bis 5 µm, aufweist.

Gegenstand der Erfindung ist ferner ein Verfahren zur Herstellung dieser beschichteten anorganischen Pigmente, das dadurch gekennzeichnet ist, daß man
a) eine oder mehrere glasbildende Komponenten nach dem Sol-Gel-Verfahren zu einem Sol umsetzt,
b) in dem erhaltenen Sol ein anorganisches Pigment oder eine Pigment-Vorstufe dispergiert,
c) die Sol-Pigment-Dispersion durch Sprühtrocknen in ein beschichtetes anorganisches Pigment überführt, das eine Xerogel-Beschichtung aufweist, und
d) gegebenenfalls die Xerogel-Beschichtung durch Wärmebehandlung zu einer glasartigen Schicht verdichtet.

Ein weiterer Gegenstand der Erfindung ist schließlich die Verwendung der beschichteten anorganischen Pigmente zur Herstellung von Emails und Formkörpern. Um z.B. Emaildekors herzustellen, kann man das erfindungsgemäß beschichtete anorganische Pigment anstelle oder zusammen mit herkömmlichen Pigmenten in üblichen Emailpasten einsetzen.

Aufgrund der erfindungsgemäßen Beschichtung der anorganischen Pigmente ist es möglich,
a) die anorganischen Pigmente im Temperaturbereich von 500 bis 1.200°C über einen für die Weiterverarbeitung ausreichenden Zeitraum gegen chemische (Oxidation, Reduktion, Zersetzung) oder physikalische (Schmelzen, Sublimieren, Verdampfen, Ostwald-Reifung) Veränderung zu schützen, so daß keine Änderung der optischen Eigenschaften (z.B. Farbänderung) eintritt;
b) ausreichend haftende Emaildekors mit hohen Pigmentanteilen bis zu 60 Gew.-% herzustellen;
c) den Schwermetallanteil in Emaildekors zu reduzieren bzw. die Einbrandtemperatur des Emails zu senken, da das Glas der Beschichtung zur Herstellung des Emailverbundes nur angeschmolzen werden muß und deutlich höhere Viskosität aufweisen kann als bei herkömmlichen Emails auf Basis von Glasfritten;
d) die Einbrandtemperatur von Emaildekoren mit nanoskaligen Pigmenten (z.B. auf Edeimetallkolloidbasis) durch Kapselung der nanoskaligen Pigmente in einer hochschmelzenden Matrixumhüllung auf Temperaturen ≤ 1.200°C zu erhöhen.
e) Emails herzustellen, die nur aus freifließenden sphärischen Partikeln bestehen, wodurch die Verarbeitbarkeit wesentlich verbessert wird.

Für die Zwecke der Erfindung geeignete anorganische Pigmente sind z.B. Metall-Pigmente wie Ag, Au, Cu, Fe, Pb, Pd und Pt; und Metalloxid-Pigmente wie Al₂O₃, Fe₂O₃, Fe₃O₄, Cr₂O₃, CuO, Cu₂O, In₂O₃, Mn₂O₃, PbO, PdO, SnO₂, TiO₂, ZnO und ZrO₂. Ebenfalls geeignet sind Metallhalogenide wie AgCl, AgBr, AgClₓBr₁₋ₓ und CuCl; Metallcarbide wie TiC und B₄C; Metallnitride wie BN und TiN; Metallarsenide wie Cd₃As₄; Metallphosphide wie Cd₃P₂; Metallchalkogenide (Sulfide, Selenide, Telluride) wie AgS, CdS, HgS, PbS, FeS₂, MoS und ZnS, CdSe, ZnSe und CdTe sowie Mischphasen wie ZnSe/PbS₂ und CdS/PbS₂. Eine weitere Gruppe geeigneter Pigmente sind Nichtmetall-Pigmente, in erster Linie Kohlenstoff z.B. in Form von Graphit oder Ruß; Nichtmetalloxid-Pigmente wie SiO₂; und Mineralien wie Glimmer, Spinelle, z.B. Magnetit oder Kupferchromspinell, Schwerspat (BaSO₄) oder Flußspat (CaF₂).

Die Teilchengröße der anorganischen Pigmente kann im Nanometer-Bereich von 0,5 bis 500 nm, vorzugsweise 1 bis 100 nm und insbesondere 1 bis 25 nm, oder aber im Mikrometer-Bereich von 0,5 bis 100 µm, vorzugsweise 1 bis 50 µm und insbesondere 1 bis 5 µm, liegen.

Im Falle von nanoskaligen Pigmenten können mehrere Pigmentpartikel von dem Xerogel- oder Glasüberzug umschlossen sein. Die mikroskopischen Pigmentpartikel werden dagegen vorzugsweise einzeln beschichtet, jedoch können auch einige Pigmentpartikel mit einer gemeinsamen Xerogel- oder Glasschicht überzogen sein. Die geometrische Form der Pigmentpartikel ist beliebig, vorzugsweise jedoch sphärisch. Neben kugelförmigen Teilchen können auch plättchenförmige oder stäbchenförmige Pigmentteilchen angewandt werden.

Die Beschichtung der erfindungsgemäßen Pigmente hat eine Zusammensetzung, die einer üblichen Einkomponenten- oder Mehrkomponenten-Glaszusammensetzung entspricht. Geeignete Einkomponentensysteme sind z.B. SiO₂, TiO₂ und ZrO₂. Verwendbare Mehrkomponentensysteme sind z.B. Zweikomponentensysteme wie 70-90 Gew. %SiO₂/10-30 Gew.% B₂O₃; Dreikomponentensysteme wie PbO/B₂O₃/SiO₂ und P₂O₅/B₂O₃/SiO₂; und Vierkomponentensysteme wie 65-92 Gew.% PbO/5-20 Gew.% B₂O₃/2-10 Gew.% SiO₂/1-5 Gew.% ZnO. Weitere Beispiele für geeignete Glaszusammensetzungen sind bei C.J. Brinker, G.W. Scherer: "Sol-Gel Science - The Physics and Chemistry of Sol-Gel-Processing", Academic Press, Boston, San Diego, New York, Sydney (1990) und in den DE 1941191, DE 3719339, DE 4117041 und DE 4217432 genannt.

Zur Herstellung der beschichteten anorganischen Pigmente werden zunächst eine oder mehrere glasbildende Komponenten nach dem Sol-Gel-Verfahren zu einem Sol umsetzt. Dies kann beispielsweise nach den in den oben genannten Druckschriften beschriebenen Methoden erfolgen, z.B. durch Hydrolyse und Kondensation einer flüssigen oder in einem Lösungsmittel gelösten Verbindung eines oder mehrerer Elemente aus der Gruppe Si, Al, Pb, Bi, P, Ti, Zn, Zr oder eines entsprechenden Vorkondensats, gegebenenfalls in Kombination mit im Reaktionsmedium löslichen Verbindungen mindestens eines Elements aus der Gruppe der Alkalimetalle (z.B. Na, K, Li), Erdalkalimetalle (z.B. Ca, Mg, Ba) und Bor und gegebenenfalls in Anwesenheit eines sauren oder basischen Kondensationskatalysators. Wegen weiterer Einzelheiten der Sol-Herstellung wird auf die oben genannte Literaturstelle von C.J. Brinker et al. und die oben genannten Patentschriften hingewiesen.

In dem erhaltenen Sol wird dann das anorganische Pigment oder eine Pigment-Vorstufe dispergiert, die unter den Bedingungen der anschließenden Sprühtrocknung und Wärmebehandlung in das gewünschte Pigment überführt wird. Zu diesem Zweck kann die Wärmebehandlung z.B. unter oxidativen oder reduktiven Bedingungen durchgeführt werden.

Die Dispergierung erfolgt vorzugsweise durch UltraschallDesintegration. Im Falle der Verwendung nanoskaliger Pigmente können die Dispersionen gegebenenfalls durch Zusatz geeigneter Komplexbildner stabilisiert werden.

Anschließend wird die erhaltene Sol-Pigment-Dispersion sprühgetrocknet, im Falle von wäßrigen Systemen vorzugsweise bei einer Temperatur von 100 bis 150°C. Hierbei entstehen mit einer Xerogel-Beschichtung versehene Pigmentpartikel mit einer Teilchengröße von 2 bis 100 µm, vorzugsweise 2 bis 10 µm.

Die Xerogel-Beschichtung kann gegebenenfalls anschließend in einem Sinterprozeß bei Temperaturen im Transformationsbereich der angewandten Glaszusammensetzung zu einer Glasschicht verdichtet werden. Die Verdichtung kann in Luft oder z.B. in einer Inertgasatmosphäre durchgeführt werden.

Die Aufheizgeschwindigkeit liegt bis zu Temperaturen, in denen synthesebedingte Restgruppen (z.B. organische Reste oder anorganische Reste wie Nitratgruppen) aus der Beschichtung entweichen, vorzugsweise in der Größenordnung von wenigen K/min. Oberhalb dieser Temperatur kann die weitere Verdichtung bis zur Endtemperatur mit deutlich höheren Aufheizgeschwindigkeiten bis zu 100 K/min erfolgen. Die Haltezeit bei der Verdichtungstemperatur ist von der Verdichtungstemperatur abhängig und bewegt sich im Bereich von einigen Minuten bis zu etwa 1 Stunde. Werden zur Verdichtung der Glasschicht Temperaturen angewandt, die deutlich oberhalb der Transformationstemperatur der Glaszusammensetzung liegen, so muß durch geeignete Maßnahmen (z.B. Wirbelschicht, Fallofen) ein Zusammenschmelzen der Partikel verhindert werden.

Zur Herstellung von Emails werden die beschichteten anorganischen Pigmente mit üblichen Zusätzen wie Glasfritte und organischen Bindemitteln zu Emailpasten verarbeitet, die sich auf herkömmliche Weise zu Emaildekors verarbeiten lassen. Anstelle der Glasfritte und der organischen Bindemittel können auch Sole oder Gele entsprechender Zusammensetzung in Verbindung mit geeigneten Zusätzen zur Einstellung der für die jeweilige Dekorierungstechnik (z.B. Siebdruck, Offsetdruck, Ink-Jet-Verfahren) erforderlichen Rheologie und/oder Zusätzen zum Erreichen der für die Weiterverarbeitung erforderlichen Haftung verwendet werden.

Formkörper können ebenfalls mit Hilfe bekannter Methoden hergesteltt werden, nach denen trockene Pulver, Suspensionen und Pasten verarbeitet werden, die ein Newtonsches oder strukturviskoses, thixotropes, rheopexes bzw. dilatantes Fließverhalten aufweisen.

Die Glasbeschichtung der erfindungsgemäßen beschichteten anorganischen Pigmente übt hierbei nicht nur eine Schutzfunktion für das Pigment aus, sondern übernimmt auch die Bindemittelfunktion.

Die folgenden Beispiele erläutern die Erfindung, ohne sie zu beschränken.

### BEISPIEL 1

Herstellung eines Komposit-Emails auf Basis eines Glases der Zusammensetzung 83, 0PbO-13, 0B₂O₃-2,4SiO₂-1, 6ZnO und eines Pigments (wahlweise CuCr₂O₄ oder Fe₃O₄)

| | |
|---|---|
| Ausgangsmaterialien | 120,0 g Pb(N_{O}3)₂ |
| | 4,2 g Zinkacetatdihydrat |
| | 600 ml Wasser |
| | 12,0 ml 0,1 M Salpetersäure |
| | 7,98 g Tetraethoxysilan (TEOS) |
| | 38,81 g Trimethylborat in 24 ml Ethanol |
| | 97,3 g Pigment (CuCr₂O₄ oder Fe₃O₄) |

In einem 1000 ml Zweihals-Rundkolben mit Rückflußkühler und Tropftrichter werden 120,0 g Blei(II)-nitrat und 4,2 g Zinkacetatdihydrat in 600 ml Wasser gelöst. Man versetzt mit 12,0 ml 0,1 M Salpetersäure und anschließend mit 7,98 ml TEOS. Nach Erwärmung auf 60°C gibt man 37,81 ml Trimethylborat in 24 ml Ethanol tropfenweise hinzu und rührt drei Stunden bei gleicher Temperatur. Man erhält ein farbloses, transparentes Sol.

In diesem Sol werden mittels Ultraschalldesintegration 97,4 g des entsprechenden Pigments dispergiert. Die Pigment-Sol-Suspension wird bei einer Düsentemperatur von 130°C sprühgetrocknet. Man erhält ein schwarzes Pulver, das synthesebedingt Restgruppen enthält, welche durch eine zweistündige Temperaturbehandlung bei 475°C entfernt werden.

Der erhaltene Kompositwerkstoff wird nach Zusatz herkömmlicher Siebdruckadditive auf herkömmliche Weise mittels Siebdruck verdruckt. Das nach dem Einbrennen bei Temperaturen von 500 bis 700°C erhaltene Dekor besteht zu jeweils 50% aus Glas und Pigment.

### BEISPIEL 2

Herstellung eines Komposit-Emails auf Basis einer Glasfritte der Zusammensetzung 89,6PbO-5,2B₂O₃-5,2SiO₂ und Graphit.

| | |
|---|---|
| Ausgangsmaterialien | 26,59 Pb(NO₃)₂ |
| | 100 ml Wasser |
| | 2,6 ml 0,1 M Salpetersäure |
| | 3,61 g Tetraethoxysilan (TEOS) |
| | 3,101 g Trimethylborat in 3,0 ml |
| | Ethanol |
| | 8,6 g Graphit |

Die Herstellung des Sols, der Pigment-Sol-Dispersion sowie deren Sprühtrocknung erfolgen wie in Beispiel 1. Mit diesem System hergestellte Materialien können im Außeneinbrand bei Temperaturen von 500 bis 700°C verarbeitet werden.

### BEISPIEL 3

Herstellung von Komposit-Materialien auf Borosilikatbasis (15 Mol% B₂O₃, 85 Mol% SiO₂)

| | |
|---|---|
| Ausgangsmaterialien | 7 ml Ethanol |
| | 30 ml 0,15 M HCl |
| | 86,8 ml Tetraethoxysilan (TEOS) |
| | 35,21 ml Trimethylborat (TMB) |
| | 20 g Magnetit |

Ethanol, TEOS und die Hälfte der benötigten HCl werden vermischt. Nach Hydrolyse des TEOS wird TMB tropfenweise zugegeben und anschließend 2 h bei 50°C gerührt. Anschließend werden die restliche HCl und das Magnetitpigment zugegeben und 5 min im Ultraschallbad dispergiert. Die Sprühtrocknung erfolgt analog Beispiel 1. Anschließend wird das beschichtete Pigment bei 700°C in N₂-Atmosphäre mit einer Aufheizgeschwindigkeit von 1 K/min mit einer Haltezeit von 1 h und einer Abkühlgeschwindigkeit von ca. 5 K/min getempert.

### BEISPIEL 4

Herstellung eines Komposit-Emails auf Borosilikatbasis (14 Mol% B₂O₃, 86 Mol% SiO₂)

| | |
|---|---|
| Ausgangsmaterialien | 7 ml Ethanol |
| | 34,8 ml 0,15 M HCl |
| | 100,5 ml Tetraethoxysilan (TEOS) |
| | 23,8 ml Trimethylborat (TMB) |
| | 20 g Magnetit |

Die Herstellung des Sols, der Pigment-Sol-Dispersion sowie deren Sprühtrocknung erfolgen analog Beispiel 3. Die thermische Nachbehandlung des Pigments zur Verdichtung der Beschichtung erfolgt jedoch bei 800°C in N₂-Atmosphäre. Durch die Beschichtung erhöht sich die zur Oxidation des Magnetits erforderliche Temperatur von 280°C auf 780°C (gemessen mittels DTA bei einer Aufheizgeschwindigkeit von 10 K/min in synthetischer Luft).

### BEISPIEL 5

Herstellung eines Komposit-Emails auf Phosphorborosilikatbasis (10P₂O₅-11B₂O₃-79SiO₂)

| | |
|---|---|
| Ausgangsmaterialien | 20 ml Ethanol |
| | 87,6 ml 0,15 M HCl |
| | 270 ml Tetraethoxysilan (TEOS) |
| | 117,7 ml Trimethylborat (TMB) |
| | 27,2 g P₂O₅ |
| | 50 g Magnetit |

Ethanol, TEOS und die Hälfte der benötigten HCl werden vermischt. Nach Hydrolyse des TEOS wird TMB tropfenweise zugegeben und anschließend 2 h bei 50°C gerührt. Anschließend werden die restliche HCl, danach das P₂O₅ und zuletzt das Magnetitpigment zugegeben und 5 min im Ultraschallbad dispergiert. Die Sprühtrocknung erfolgt analog Beispiel 1. Anschließend wird das beschichtete Pigment bei 720°C in N₂-Atmosphäre mit einer Aufheiz-geschwindigkeit von 1 K/min mit einer Haltezeit von 1 h und einer Abkühlgeschwindigkeit von ca. 5 K/min getempert.

### BEISPIEL 6

Herstellung eines Schwarzpigmentes auf Basis eines Borosilikat-Xerogels

| | |
|---|---|
| Ausgangsmaterialien | 24,28 g Tetraethoxysilan (TEOS) |
| | 20 ml 10%-ige Essigsäure |
| | 8,96 g Trimethylborat (TMB) |

In einem 250 ml Einhals-Rundkolben mit Rückflußkühler und Tropftrichter werden 24,28 g TEOS und 20 ml 10%-ige Essigsäure gemischt. Nach Erwärmung auf 50°C versetzt man tropfenweise mit 8,96 g TMB und rührt eine Stunde bei dieser Temperatur.

Das so erhaltene farblose, transparente Sol wird bei einer Düsentemperatur von 130°C im Sprühtrockner getrocknet. Zur Herstellung des Schwarzpigmentes, bestehend aus Kohlenstoff-Kolloiden und einer Borosilikatmatrix der Zusammensetzung 70SiO₂-30B₂O₃, wird dieses weiße Xerogelpulver mit einer Heizrate von 15 K/min auf 750°C erhitzt und diese Temperatur eine Stunde gehalten. Die Temperaturbehandlung kann dabei wahlweise in Luft- oder Inertgasatmosphäre erfolgen. Die Schwarzfärbung des resultierenden Pulvers stammt von Kohlenstoff-Kolloiden, die infolge unvollständiger Verbrennung restlicher organischer Gruppen im Xerogel verbleiben.

Dieses Schwarzpigment kann durch Zusatz üblicher Glasfritten und Siebdruckadditive zu einem schwarzen Emaildekor verarbeitet werden. Im Einbrandbereich von 500 bis 700°C treten sowohl beim Innen- als auch beim Außeneinbrand keine Verfärbungen des Dekors auf.

### BEISPIEL 7

Einbettung von Au-Kolloiden in eine SiO₂-Matrix

| | |
|---|---|
| Ausgangsmaterialien | 100 ml 3-Glycidoxypropyltrimethoxysilan (GPTS) |
| | 12,2 ml Wasser |
| | 6,98 ml 3-Aminopropyltriethoxysilan (APTS) |
| | 50 ml Ethanol |
| | 1,79 g Tetrachlorogoldsäurehydrat (H[AuCl₄]·H₂O) |

In einem 250 ml Dreihals-Rundkolben mit Rückflußkühler und Tropftrichter werden 100 ml GPTS und 12,2 ml H₂O gemischt. Danach wird das Gemisch 2 h auf 120°C erhitzt und unter Rückfluß erhitzt. In einem zweiten Ansatz wird in einem 100 ml Zweihalskolben 1,79 g H[AuCl₄]·H₂O in 50 ml Ethanol gelöst und tropfenweise mit 1,16 ml APTS in einem Verhältnis von 1:1 vorkomplexiert. Die erhaltene Goldlösung wird dann vorsichtig in das vorhydrolisierte GPTS-Sol eingerührt. Zu dem goldhaltigen GPTS-Sol wird dann noch 5,81 ml APTS langsam unter Zutropfen eingerührt und die fertige Lösung noch 10 min bei Raumtemperatur gerührt.

Das so erhaltene orangerote, transparente Sol wird bei einer Düsentemperatur von 110°C im Sprühtrockner getrocknet. Zur Herstellung des Rotpigmentes, bestehend aus Gold-Kolloiden und einer Silikatmatrix SiO₂, wird dieses orangefarbene Xerogelpulver mit einer Heizrate von 70 K/h auf 1000°C erhitzt und diese Temperatur 15 Minuten gehalten. Die Temperaturbehandlung erfolgt in Luftatmosphäre. Die Rotfärbung des resultierenden Pulvers stammt von Au-Kolloiden im Größenbereich von 2 nm bis 50 nm, die durch Reduktion der Goldionen durch die organischen Bestandteile des Xerogels entstanden sind.

### BEISPIEL 8

Herstellung von beschichteten magnetischen Pigment-Partikeln

Es wurden 6 verschiedene Sole verwendet. Die Herstellung der Sole wurde nach folgenden Schemata durchgeführt:

### Sol 1 (SiO₂:B₂O₃ = 7:3):

Die Synthese wurde in einem 250 ml Rundkolben unter ständigem Rühren durchgeführt.
86,6 ml Tetraethylorthosilicat
+ 7 ml wasserfreies unvergälltes Ethanol
+ 14,1 ml 0,15 M HCl

Es entsteht ein zweiphasiges Gemisch, welches bei Raumtemperatur solange gerührt wird, bis es einphasig wird. Danach erfolgt tropfenweise die Zugabe von + 37,8 ml Trimethylborat.

Anschließend wird das Sol 2 Stunden bei 50°C gehalten. Danach erfolgt die Zugabe von + 14,1 ml 0,15 M HCl.

### Sol 2 (SiO₂:B₂O₃ = 4:1):

Die Synthese wurde in einem 250 ml Rundkolben unter ständigem Rühren durchgeführt.
100,5 ml Tetraethylorthosilicat
+ 7 ml wasserfreies unvergälltes Ethanol
+ 16,3 ml 0,15 M HCl

Es entsteht ein zweiphasiges Gemisch, welches bei Raumtemperatur solange gerührt wird, bis es einphasig wird. Danach erfolgt tropfenweise die Zugabe von
+ 25,6 ml Trimethylborat.
Anschließend wird das Sol 2 Stunden bei 50°C gehalten. Danach erfolgt die Zugabe von + 16,3 ml 0,15 M HCl.

### Sol 3 (SiO₂:B₂O₃ = 85:15):

Die Synthese wurde in einem 250 ml Rundkolben unter ständigem Rühren durchgeführt.
107,8 ml Tetraethylorthosilicat
+ 7 ml wasserfreies unvergälltes Ethanol
+ 17,5 ml 0,15 M HCl

Es entsteht ein zweiphasiges Gemisch, welches bei Raumtemperatur solange gerührt wird, bis es einphasig wird. Danach erfolgt tropfenweise die Zugabe von + 19,4 ml Trimethylborat.
Anschließend wird das Sol 2 Stunden bei 50°C gehalten. Danach erfolgt die Zugabe von + 17,5 ml 0,15 M HCl.

### Sol 4 (SiO₂:B₂O₃ = 4:1; 2 Mol% P₂O₅):

Die Synthese wurde in einem 250 ml Rundkolben unter ständigem Rühren durchgeführt.
100,5 ml Tetraethylorthosilicat
+ 7 ml wasserfreies unvergälltes Ethanol
+ 16,3 ml 0,15 M HCl

Es entsteht ein zweiphasiges Gemisch, welches bei Raumtemperatur solange gerührt wird, bis es einphasig wird. Danach erfolgt tropfenweise die Zugabe von + 25,6 ml Trimethylborat.

Anschließend wird das Sol 2 Stunden bei 50°C gehalten. Danach erfolgt die Zugabe von
+ 16,3 ml 0,15 M HCl
+ 1,63 g P₂O₅

### Sol 5 (SiO₂:B₂O₃ = 4:1; Mol% Al₂O₃):

Die Synthese wurde in einem 250 ml Rundkolben unter ständigem Rühren durchgeführt.
100,5 ml Tetraethylorthosilicat
+ 7 ml wasserfreies unvergälltes Ethanol
+ 16,3 ml 0,15 M HCl

Es entsteht ein zweiphasiges Gemisch, welches bei Raumtemperatur solange gerührt wird, bis es einphasig wird. Danach erfolgt tropfenweise die Zugabe von
+ 25,6 ml Trimethylborat.

Anschließend wird das Sol 2 Stunden bei 50°C gehalten. Danach erfolgt die Zugabe von
+ 16,3 ml 0,15 M HCl
+ 3,06 g AlCl₃

### Sol 6 (SiO₂:B₂O₃ = 4:1; Mol% ZrO₂):

Die Synthese wurde in einem 250 ml Rundkolben unter ständigem Rühren durchgeführt.
100,5 ml Tetraethylorthosilicat
+ 7 ml wasserfreies unvergälltes Ethanol
+ 16,3 ml 0,15 M HCl

Es entsteht ein zweiphasiges Gemisch, welches bei Raumtemperatur solange gerührt wird, bis es einphasig wird. Danach erfolgt tropfenweise die Zugabe von
+ 25,6 ml Trimethylborat,
+ 5,15 ml Zirkon(IV)-propylat, 70 Gew.% Lsg in 1-Propanol
Anschließend wird das Sol 2 Stunden bei 50°C gehalten. Danach erfolgt die Zugabe von + 16,3 ml 0,15 M HCl.

Nach weiteren 2 Stunden bei 50°C werden in jeweils 150 ml der Sole 22,5 g Glimmer (Iriodin 600) eingerührt und anschließend mit einem Sprühtrockner beschichtet Die Düsentemperatur des Sprühtrockners betrug 134°C.

Das durch den Sprühtrockenprozeß erhaltene Pulver wurde anschließend einer Temperaturbehandlung unter Stickstoffatmosphäre (90 l/h) unterzogen. Die Aufheizgeschwindigkeit betrug hierbei 1 K/min und die Haltezeit betrug 2 Stunden bei der erreichten Maximaltemperatur. Diese Temperatur lag bei der Beschichtung mit Sol 1 bei 750°C, bei der Beschichtung mit Sol 2 bei 860°C und bei den übrigen Beschichtungen bei 800°C. Nach dem Sinterprozeß wurde der Ofen abgeschaltet und das Pulver auf Raumtemperatur abgekühlt.

## Patentansprüche

1. Beschichtete anorganische Pigmente, umfassend ein anorganisches Pigment, das eine nach dem Sol-Gel-Verfahren aus glasbildenden Komponenten hergestellte und zu einem Xerogel oder Glas verdichtete Beschichtung mit einer Schichtdicke von mindestens 0,8 µm aufweist.

2. Beschichtete anorganische Pigmente nach Anspruch 1, **dadurch gekennzeichnet, daß** das Pigment ausgewählt ist unter Metall-Pigmenten wie Ag, Au, Cu, Fe, Pb, Pd und Pt.

3. Beschichtete anorganische Pigmente nach Anspruch 1, **dadurch gekennzeichnet, daß** das Pigment ausgewählt ist unter Metalloxid-Pigmenten wie Al₂O₃, Fe₂O₃, Fe₃O₄, Cr₂O₃, CuO, Cu₂O, In₂O₃, Mn₂O₃, PbO, PdO, SnO₂, TiO₂, ZnO und ZrO₂.

4. Beschichtete anorganische Pigmente nach Anspruch 1, **dadurch gekennzeichnet, daß** das Pigment ausgewählt ist unter Metallverbindungs-Pigmenten wie Metallhalogeniden, Metallcarbiden, Metallnitriden, Metallarseniden, Metallphosphiden und Metallchalkogeniden (Sulfiden, Seleniden, Telluriden).

5. Beschichtete anorganische Pigmente nach Anspruch 1, **dadurch gekennzeichnet, daß** das Pigment ausgewählt ist unter Nichtmetall-Pigmenten wie Kohlenstoff.

6. Beschichtete anorganische Pigmente nach Anspruch 1, **dadurch gekennzeichnet, daß** das Pigment ausgewählt ist unter Nichtmetalloxid-Pigmenten wie SiO₂ oder Mineralien wie Glimmer, Spinellen, Schwerspat oder Flußspat.

7. Beschichtete anorganische Pigmente nach einem der Ansprüche 1 bis 6, **dadurch gekennzeichnet, daß** das unbeschichtete Pigment eine Teilchengröße im Bereich von 0,5 nm bis 100 µm hat.

8. Beschichtete anorganische Pigmente nach einem der Ansprüche 1 bis 7, **dadurch gekennzeichnet, daß** die Beschichtung eine Zusammensetzung hat, die einer üblichen Einkomponenten- oder Mehrkomponenten-Glaszusammensetzung entspricht.

9. Beschichtete anorganische Pigmente nach einem der Ansprüche 1 bis 8, **dadurch gekennzeichnet, daß** sie eine Beschichtung mit einer Schichtdicke von 1 bis 5 µm aufweisen.

10. Beschichtete anorganische Pigmente nach einem der Ansprüche 1 bis 9, **dadurch gekennzeichnet, daß** sie eine Korngröße von 2 bis 100 µm aufweisen.

11. Verfahren zur Herstellung der beschichteten anorganischen Pigmente nach Anspruch 1, **dadurch gekennzeichnet, daß** man
a) eine oder mehrere glasbildende Komponenten-nach dem Sol-Gel-Verfahren zu einem Sol umsetzt,
b) in dem erhaltenen Sol ein anorganisches Pigment oder eine Pigment-Vorstufe dispergiert,
c) die Sol-Pigment-Dispersion durch Sprühtrocknen in ein beschichtetes anorganisches Pigment überführt, das eine Xerogel-Beschichtung aufweist, und
d) gegebenenfalls die Xerogel-Beschichtung durch Wärmebehandlung zu einer glasartigen Schicht verdichtet.

12. Verwendung der beschichteten anorganischen Pigmente nach Anspruch 1 zur Herstellung von Emails und Formkörpern.

## Claims

1. Coated inorganic pigments comprising an inorganic pigment which has a coating, prepared by the sol-gel process from glass-forming components and densified to form a xerogel or glass, having a layer thickness of at least 0.8 µm.

2. Coated inorganic pigments according to Claim 1, **characterized in that** the pigment is selected from metal pigments such as Ag, Au, Cu, Fe, Pb, Pd and Pt.

3. Coated inorganic pigments according to Claim 1, **characterized in that** the pigment is selected from metal oxide pigments such as Al₂O₃, Fe₂O₃, Fe₃O₄, Cr₂O₃, CuO, Cu₂O, In₂O₃, Mn₂O₃, PbO, PdO, SnO₂, TiO₂, ZnO and ZrO₂.

4. Coated inorganic pigments according to Claim 1, **characterized in that** the pigment is selected from metal compound pigments such as metal halides, metal carbides, metal nitrides, metal arsenides, metal phosphides and metal chalcogenides (sulphides, selenides, tellurides).

5. Coated inorganic pigments according to Claim 1, **characterized in that** the pigment is selected from non-metal pigments such as carbon.

6. Coated inorganic pigments according to Claim 1, **characterized in that** the pigment is selected from non-metal oxide pigments such as SiO₂ or minerals such as micas, spinets, heavy spar or fluorspar.

7. Coated inorganic pigments according to one of Claims 1 to 6, **characterized in that** the uncoated pigment has a particle size in the range from 0.5 nm to 100 µm.

8. Coated inorganic pigments according to one of Claims 1 to 7, **characterized in that** the composition of the coating corresponds to a customary one-component or multi-component glass composition.

9. Coated inorganic pigments according to one of Claims 1 to 8, **characterized in that** they have a coating with a layer thickness of from 1 to 5 µm.

10. Coated inorganic pigments according to one of Claims 1 to 9, **characterized in that** they have a particle size of from 2 to 100 µm.

11. Process for the preparation of the coated inorganic pigments according to Claim 1, **characterized in that**
a) one or more glass-forming components are reacted to form a sol by the sol-gel process,
b) an inorganic pigment or a pigment precursor is dispersed in the resulting sol,
c) the sol-pigment dispersion is converted by spray drying into a coated inorganic pigment which has a xerogel coating, and
d) if desired, the xerogel coating is densified by heat treatment to form a vitreous layer.

12. Use of the coated inorganic pigments according to Claim 1 for the production of enamels and mouldings.

## Revendications

1. Pigments minéraux enrobés comprenant un pigment minéral qui porte un revêtement d'une épaisseur au moins égale à 0,8 µm, préparé selon un procédé sol-gel à partir d'agents vitrifiables et compacté pour donner un xérogel ou du verre.

2. Pigments minéraux enrobés selon la revendication 1, **caractérisés par le fait que** le pigment est choisi parmi les pigments à base de métaux tels que Ag, Au, Cu, Fe, Pb, Pd et Pt.

3. Pigments minéraux enrobés selon la revendication 1, **caractérisées en ce que** le pigment est choisi parmi les pigments à base d'oxydes métalliques tels que Al₂O₃, Fe₂O₃, Fe₃O₄, Cr₂O₃, CuO, Cu₂O, In₂O₃, Mn₂O₃, PbO, PdO, SnO₂, TiO₂, ZnO et ZrO₂.

4. Pigments minéraux enrobés selon la revendication 1, **caractérisés par le fait que** le pigment est choisi parmi les pigments à base de composés métalliques tels que les halogénures de métaux, les carbures de métaux, les nitrures de métaux, les arséniures de métaux, les phosphures de métaux et les chalcogénures (sulfures, séléniures, tellurures) de métaux.

5. Pigments minéraux enrobés selon la revendication 1, **caractérisés par le fait que** le pigment est choisi parmi les pigments non métalliques tels que le carbone.

6. Pigments minéraux enrobés selon la revendication 1, **caractérisés par le fait que** le pigment est choisi parmi les pigments à base d'oxydes non métalliques tels que SiO₂ ou des minéraux tels que le mica, les spinelles, le spath lourd ou le spath fluor.

7. Pigments minéraux enrobés selon l'une quelconque des revendications 1 à 6, **caractérisés en ce que** le pigment non enrobé est constitué de particules ayant une taille comprise entre 0,5 nm et 100 µm.

8. Pigments minéraux enrobés selon l'une quelconque des revendications 1 à 7, **caractérisés en ce que** le revêtement a une composition correspondant à celle d'une composition de verre habituelle à un ou plusieurs composants.

9. Pigments minéraux enrobés selon l'une quelconque des revendications 1 à 8, **caractérisés en ce qu'**ils présentent un revêtement d'une épaisseur comprise entre 1 et 5 µm.

10. Pigments minéraux enrobés selon l'une des revendications 1 à 9, **caractérisés en ce qu'**ils présentent une taille de particules comprise entre 2 et 100 µm.

11. Procédé de préparation des pigments minéraux enrobés selon la revendication 1, **caractérisé en ce que**
a) l'on convertit, selon le procédé sol-gel, un ou plusieurs composants vitrifiables en un sol,
b) l'on disperse dans le sol obtenu un pigment minéral ou un précurseur d'un tel pigment,
c) l'on convertit la dispersion pigment/sol par séchage par pulvérisation en un pigment minéral enrobé présentant un revêtement de type xérogel, et
d) que l'on compacte éventuellement le revêtement de type xérogel par un traitement thermique en une couche vitreuse.

12. Utilisation des pigments minéraux enrobés selon la revendication 1 pour la préparation d'émaux et de pièces moulées.
